# EUROPEAN PATENT APPLICATION

(11) **EP 2 262 143 A1**
(43) Date of publication of application: **15.12.2010**
(21) Application number: 09179070.9
(22) Date of filing: 14.12.2009
(51) Int. Cl.: H04K 1/00, H04M 1/60

(54) **Encryption system for vocal communications**

(30) Priority: 09.06.2009 IT MI20091006
(71) Applicant: Petronici, Claudio, 47890 San Marino (IT)
(72) Inventor: Beltramini Angelo, 28010 Ameno (NO) (IT)
(74) Representative: Vanosi, Adelio Valeriano

(57) **Abstract**

An encryption system for audio or vocal communications, comprising a device (A1) for encrypted communication with a similar device (A4), said device (A1, A4) comprising at least one bluetooth chip (A7) arranged to effect a communication via at least one bluetooth connection (A6) between a first (A1) and a second (A4) of said devices, said bluetooth chip comprising encryption means (B18, B19, B20, C18, C19) accessible to a user.

## Description

The present invention relates to an encryption system for audio or vocal communications.

Commercial GSM cellular telephones are available able to encrypt the communication between them; these are very costly products. Commercial devices in the form of add-ons are also known which, connected via the usual physical port provided on new generation cellular telephones, can encrypt and decrypt the conversation between two cellular telephones. These devices, also very costly, have the drawback of having to use a "data" communication, which necessarily requires connection with service centres or similar data devices, scheduled by the GSM network provider; in this case, the cellular telephone is substantially used only as a modem. To enable this communication to be effected, it is sometimes necessary to arrange an ad hoc subscription with the provider. The first aforedescribed system has the drawback of being very costly and somewhat inflexible.

The second system, besides being very costly, has the drawback of having to use a data communication scheduled by the operator.

An object of the present invention is to provide a flexible and economical encryption system particularly suitable for use by cellular telephones provided with a bluetooth port, as clarified hereinafter.

These and other objects are attained by an encryption system operating via a bluetooth device, or rather by a bluetooth chip, suitably modified for encrypting and decrypting a conversation which can be commonly used with cellular telephones of conventional type, i.e. without introducing any substantial modification therein.

Further characteristics and advantages of the invention will be apparent from the description of a preferred but non-exclusive embodiment of the device, illustrated by way of non-limiting example in the accompanying drawings, in which:
Figure 1 is a schematic view, at the highest level, of the communication system of the present invention, enabling a "vocal or audio" encrypted connection to be made between the two bluetooth devices A1 and A4, via two cellular telephones A2 and A3 located within the ordinary GSM network A5;
Figure 2 schematically represents the structure of the bluetooth microphone/earpiece or more briefly "bluetooth" of the present invention;
Figure 3 shows an alternative embodiment of Figure 2;
Figure 4 shows a different application of the device of the invention; and
Figure 5 schematically shows the more detailed structure of the application of Figure 4.

A system according to the invention is shown in said figures and indicated overall by the reference numeral 1.

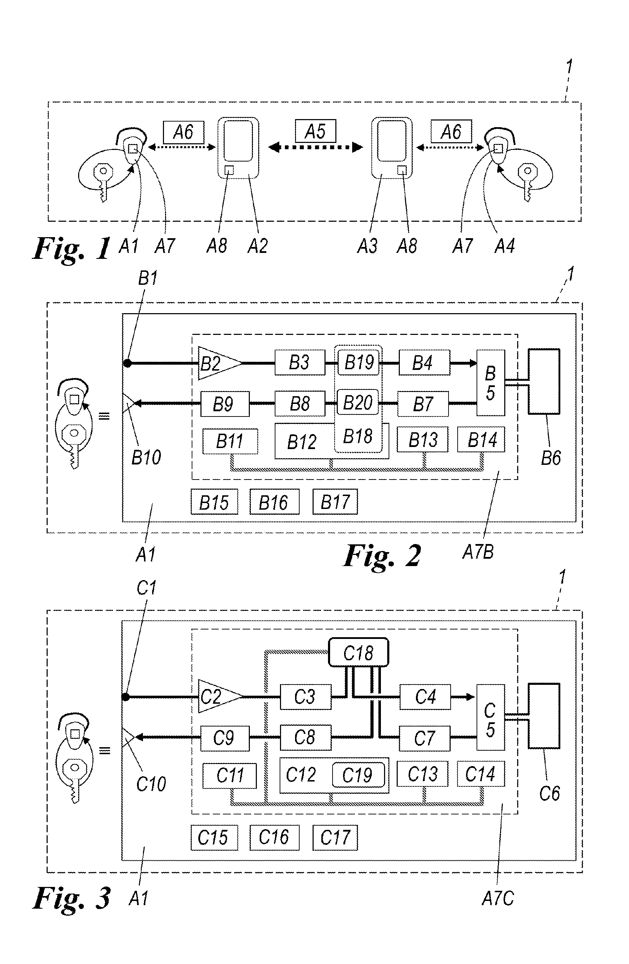

In the case of Figure 1, in addition to two bluetooth devices A1 and A4 which communicate via two cellular telephones A2 and A3 connected into the ordinary GSM network A5, radio communication A6 is shown between the bluetooth and cellular telephone at 2.4 GHz. It is important to note that this communication is ensured by the presence of a pair of bluetooth chips A7, one in each bluetooth device A1, A4 and the other A8 in each cellular telephone.

In the following description the definition "chip bluetooth" relates to the entire chip set blue tooth or a part thereof.

In particular the encryption system in question uses at least one pair of suitably modified identical bluetooth microphone/earpiece devices A1, A4 The bluetooth microphone/earpiece devices are known colloquially and hereinafter as bluetooths for short. This suitable modification enables encrypted communication between modified devices.

In addition to encrypted or clear communication, intrinsic in a piconet (term used to identify a 2.4 GHz network of only bluetooth devices), the present invention relates in particular to the system of Figure 1 in which the bluetooth devices are coupled to standard cellular telephones active within the GSM network.

Common bluetooth devices use a single functional component, identifiable as a bluetooth chip associated with known auxiliary parts such as: the microphone, loudspeaker, antenna, power circuits, battery, switches, the body in the form of a bluetooth earpiece, etc, which will not be further described as they are conventional.

It should be noted that in conventional bluetooth chips there is an embedded cryptography system which is locally closed, automatic and hence not accessible to the external user, which enables correct operation of several devices enabling several simultaneous communications within the physical space of the same piconet, for example between several pairs of devices, without these mutually interfering.

These structural and functional data of the bluetooth chip satisfy easily accessible standardized rules, as is well known to the experts of the art.

In contrast, the encryption system introduced by the present invention is additional to the embedded system, whatever this latter is, and is accessible to the external user to enable an encryption to be achieved which is controllable by this latter. In the present text, the encryption system accessible to the external user is hence in the form of a software, hardware or firmware system within which the user can enable and disable the encryption system, for example by means of a specifically provided switch. The user can also intervene in the encryption system by inserting different keys.

The bluetooth device A1 (and A4) is formed by modifying a traditional bluetooth device. This modification can be achieved for example by means of two different embodiments.

The first implementation of the modified bluetooth chip A7, shown in detail in Figure 2, provides for intervention only via software; hence specific applicational software for implementing encryption and decryption is added to the flash memory of the bluetooth chip A7B, present in the terminal devices. This leaves the structure of the normal bluetooth device "almost" unmodified; in fact, a single switch could be advantageously added (not specifically shown in the figures), to enable the user to select between normal and encrypted operation, together with a port (for example USB) for inserting keys and possible parameters.

The device substantially contains a single component (Figure 2), i.e. the bluetooth chip A7B. Within this there can be seen the constituent blocks of the two audio paths for transmission and reception in addition to the microcalculator.

In particular, in the transmission path after the microphone B1 (external to the chip), the following blocks can be identified: input amplifier B2, analogue/digital converter for PCM encoding B3, continuously variable slope delta modulation CSVD B4, modulator, demodulator and 2.4 GHz oscillator - MDO B5, and finally the antenna B6 external to the chip. Moving backwards starting from the block B5, on the reception path, there are also the CSVD block B7, the digital/analogue converter for PCM decoding B8, and finally the filter B9 which also includes the reception amplifier not shown in the figure. The loudspeaker, external to the bluetooth chip, closes the reception path.

In addition to these fundamental blocks for processing the vocal or audio lines, either transmitted or received, there are in the bluetooth chip other blocks essential for operation. In this respect there are the microprocessor B11, the flash memory B12 in which the conventional software of the bluetooth chip is inaccessibly embedded, the RAM memory B13 and finally all the I/O circuits B14 which are interconnected, in a manner not shown in the figures, with all blocks internal and external to the bluetooth chip.

For completeness, the components external to the bluetooth chip A7B are also shown, i.e. the USB connector B15, the selection and command switches B16, also including the potentiometer for adjusting the reception volume, not specifically shown, and finally, in a single block B17, the power unit and storage battery.

This embodiment of the invention comprises the addition, in the flash memory B12, of an applicational software package B18 able to provide a normal bluetooth chip with the capacity to encrypt and decrypt the audio communication in transit. This applicational software acts within the programme with two separate assemblies of software operators, the first B19 for performing the transmission encryption operations and the second B20 for performing the reception decryption operations.

This software package B18, when added to the normal bluetooth chip, represents the encryption means accessible to the external user.

The vocal or audio signal originating from the microphone B1, amplified in B2 and converted into PCM digital form in B3, is processed by the encryption operator B19 which returns another encrypted audio signal still in digital form possessing all the morphological characteristics of an audio or voice signal enabling it to undergo subsequent treatment by the CSVD block B4.

In speaking of digitalized vocal or audio data, implicit reference is made to the very well known international standards on PCM (pulse code modulation) analogue/digital conversion.

In reception, the second decryption operator B20 acts on the received audio signal, to subject it to inverse treatment.

In this case the modified bluetooth differs, in terms of hardware, from a normal series device only by a switch added to the block 16 in addition to those already present, to enable the user to choose between normal and encrypted operation. The USB port B15 is also present enabling the user to gain access to the applicational software B18.

A second embodiment of the modified bluetooth chip A7 (Figure 3) consists of one or more chips C18 in the added hardware connected to the bluetooth chip, plus the addition of specific applicational software C19, different from that of the first embodiment.

This makes it essential to redo the printed circuit board of the bluetooth, to hence form a new device shown as a block diagram in Figure 3 and indicated by the reference symbol A7C. In this figure the previously used reference numerals are used but preceded by the letter C instead of B. Essentially, in this embodiment the encryption means comprise both software and hardware.

From the block diagram it is apparent that in terms of hardware this second embodiment differs from the first by the addition of one or more chips identified by the symbol C18. Again in this case, new applicational software indicated by the symbol C19 is added to the flash memory C12 present in this bluetooth chip.

From the functional viewpoint all the blocks maintain the same functionality as those of the first embodiment, with the exception of the additional function implemented by the cooperation between the hardware block C18 and the applicational software C19.

The choice of embodiment between the two proposed alternatives is dictated by technological and cost convenience, and by the chosen encryption method.

The bluetooth, modified in accordance with the present invention and totally independent of the chosen embodiment, is certainly able to also operate as a normal bluetooth, such as to ensure normal clear communication with similar common devices not modified in accordance with the present invention. In this respect, the miniaturized switch added to the bluetooth, forming part of the assembly of switches B16 or C16, enables the person firstly making the call to choose, via the relative GSM cellular telephone, between encrypted operation and normal operation. The called bluetooth, if modified in accordance with the present invention i.e. enabled for encrypted communication, if switched on and connected to the relative GSM or similar cellular telephone, will automatically switch-over into this mode each time that this becomes necessary.

Again in the embodiment of Figure 3, the encryption means C19 are accessible via the USB port C15.

Essentially, the signal received by the microphone B1 or C1 (user's voice), after suitable processing by the amplifier B2 or C2 and by the analogue/digital converter B3 or C3 into PCM digital form, is transformed by the encryption operators, i.e. by the operator B19 or by the hardware C18 in cooperation with the software C19, into an encrypted digital signal which preserves the same morphology as a PCM analogue signal of non-encrypted vocal character, and hence for subsequent treatment by the CSDV block B4 or C4. After analyzing the signal, a second functional encryption at the communication within the "piconet" and signal treatments provided by the normal logic of this CSVD block lead the final signal to the modulation/demodulation circuits B5 or C5 and from there to the antenna B6 or C6 which transmits it, with local 2.4 GHz communication, to the cellular telephone which is at the other end of the piconet.

The radio signal which travels within the piconet is illegible because of the second encryption; the first encryption (that intrinsic of the bluetooth) can be easily decrypted by a third warning device provided with a receiving bluetooth chip, whereas the second encryption, i.e. that imposed by the means B18, C19, C18 in accordance with the present invention, cannot be decrypted by the same warning device.

The cellular telephone A2, which forms the other end of the piconet, also contains a conventional bluetooth chip A8. The received digital signal, morphologically equal to the original vocal or audio signal even if encrypted, is subjected to inverse treatment by the same bluetooth chip A8 to be hence fed to the circuits inside the cellular telephone and from those to the GSM network A5. The received signal is available at the bluetooth chip output in two different modes.

The first mode is the conventional mode provided in all couplings between a bluetooth chip and a cellular telephone. The signal is made available in analogue form and is then fed to the normal transmission chain of the cellular telephone and from there to the GSM network. The signal transmitted in this manner within the GSM network, if intercepted, will not be clear and will not be understandable.

The second mode consists of withdrawing the PCM digital signal immediately after the CSVD block of the bluetooth chip present in the cellular telephone, hence prior to the D/A PCM conversion which was carried out with the first and usual mode. The signal in this digital form is fed to a specific "point" within the cellular telephone from which access is gained directly to the cellular telephone modulation circuits. Digital and hence compatible data transit through this point, but represent vocal or audio information encoded differently from a normal data transmission which bypasses the normal aforesaid "audio or vocal" communication paths, hence enabling access to a specific intermediate point of the said cellular telephone, totally similar to that provided for "data" communication, but not necessarily the same and in any event not having the same function. Hence in this case the cellular telephone is used only as a modem, however, in contrast to a data communication intended for specific interlocutors, it now becomes an audio or vocal communication which in no case requires specific or different contracts with the GSM provider.

In this second case an ad hoc programme will be installed in the cellular telephone, which can be easily achieved via the normal USB ports provided on cellular telephones as if it were for example a new ringtone or play programme.

In both cases because of the conventional logic of the cellular telephone A2 the signal of vocal character is substantially a digitalized audio signal totally indistinguishable, from the morphological viewpoint, from that originating from the same microphone associated with the cellular telephone or from that received by a conventional bluetooth earpiece, and is therefore fed by the antenna precisely of the cellular telephone as such. The signal fed in this manner by the cellular telephone is however encrypted and even if intercepted within the GSM network A5 will not be understandable.

In practice this signal is received by a second cellular telephone A3, associated with a second bluetooth device A4 perfectly identical to the first. It is treated in an exactly reverse manner both by the cellular telephone and by the bluetooth and is returned after decryption at B18 and B20 or C18 and C19 as a normal voice signal.

The same process takes place in the opposite direction, hence from the device A4 to the first device A1 to allow communication.

The encryption and decryption operators are obviously confined within the bluetooth devices A1 and A4. For encryption and decryption they use the classical encryption instruments, in particular an obligatory secret key contained in said bluetooth devices. The pair of keys can also be non-identical, again on the basis of the type of encryption method used; again, on the basis thereof a public key can also be used, or an encrypted or clear preamble. This also implies the use of a key communication or distribution method. All this takes place in accordance with classical consolidated encryption techniques certainly known to the experts of the art. The encryption operators are accessible to the user precisely because the user is enabled to insert these keys, for example via the USB port of the bluetooth devices.

These bluetooth devices A1, A4, modified in accordance with the present invention, can evidently communicate in pairs with each other within a piconet, in the absence, and hence totally independently, of the cellular telephones and of the GSM network or the like.

All the aforesaid relates to a direct connection A6 with a cellular telephone A2 and from there to the GSM network A5.

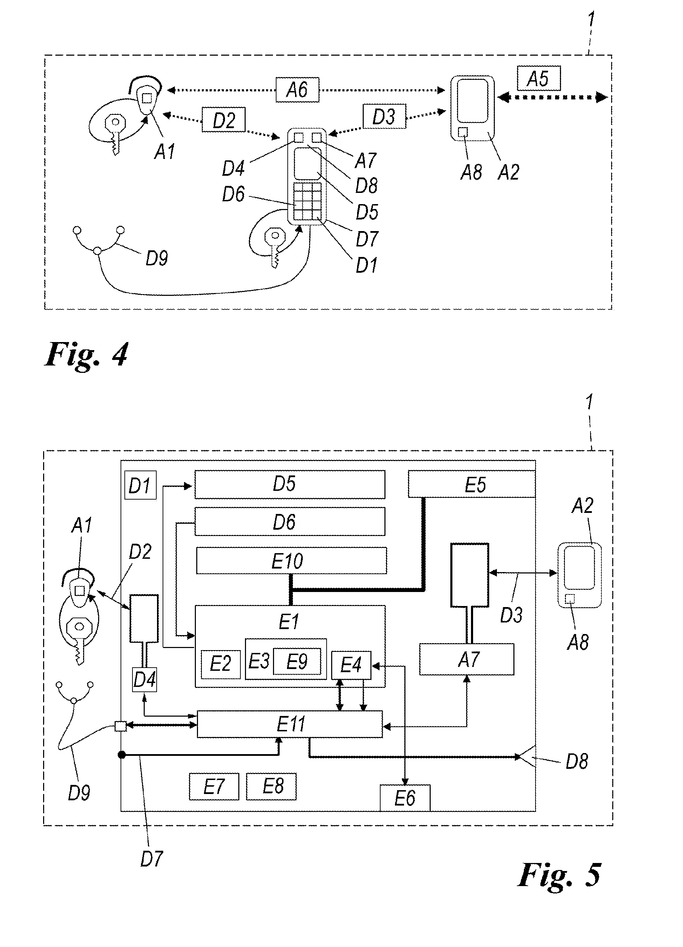

In a different form of utilization Figure 4, the device A1 can be connected to a portable palm device D1 via a first radio connection at 2.4 GHz, to hence generate a first piconet. The portable palm-held device D1 is connected to the cellular telephone A2 via a second 2.4 GHz radio connection D3, hence generating a second piconet within the same radio area, and from there to the GSM network A5.

The palm-held device D1 enables locally encrypted alphanumerical messages, such as SMS or E-mail, to be transmitted and received by a display and a keypad with which it is provided.

The apparatus D1 is hence complementary to the first device A1.

Figure 4 shows for brevity only one half of the system. The other reciprocal identical half is located at any other point of the GSM network.

When switched on, the palm-held device D1 automatically assumes a "First Operating Mode" (stand-by); this is maintained passive and does not interfere in any manner with any communication A6 between the bluetooth device A1 and the cellular telephone A2 connected to the same GSM network A5.

By means of a second command fed in via the keypad, the palm-held device D1 can assume a "Second Operating Mode" (internal source data communication). In this case locally encrypted alphanumerical messages, such as SMS or E-mail, can be transmitted with the aid of the incorporated display D5 and keypad D6. It should be noted that for handling E-mails the cellular telephone A2 must be enabled by a suitable provider. If switched on, the palm-held device D1 on receiving an encrypted SMS or E-mail automatically switches to this second mode. These communications between the apparatus D1 and cellular telephone A2 take place via the connection D3, precisely of the second piconet. If these messages are to be transmitted and received in the clear, they are normally handled by the cellular telephone A2.

In a "Third Operating Mode" (external source data communication), also selectable by the keypad, the microcalculator E1 is able, via the USB port E6, to acquire, send, encrypt and decrypt all types of ASCII files available via the USB port E6.

In a "Fourth Operating Mode", also selectable by the keypad, the normal or encrypted telephony functions can be performed; this again takes place via the connection D3 with the cellular telephone A1. This encrypted or non-encrypted telephony function uses the microphone D7 and the loudspeaker D8 integrated into the said D1. Alternatively, as is usual in all palm-held devices, the telephony function can take place via a classic connection cable provided with microphone/earpiece D9. To enable encrypted vocal communication, a bluetooth chip A7 is present in the apparatus D1 and in this case functions in accordance with the modified mode A7B or A7C identical to those previously described (see Figures 2 and 3). This same bluetooth chip, besides supporting all audio or vocal encryption and decryption operations, also supports all the communications D3 with the cellular telephone A2.

The same D1, by a suitable command fed in via the keypad, can assume a "Fifth Operating Mode" (by-pass) for performing the function of radio bridge between A1 and A2; this takes place via the two simultaneously active piconets D2 and D3. The radio bridge function necessarily implies that the bluetooth device A1 can be connected by the connection D2 of the first piconet to the palm-held device D1, which itself must contain a corresponding conventional bluetooth chip D4. The said palm-held device D1 will contain a second bluetooth chip A7 which, in this specific case, operates normally.

By a suitable command fed in via the keypad, the said D1 can assume a "Sixth Operating Mode" totally equal to the preceding, with the exception that in this case the bluetooth chip A7 functions in accordance with the modified mode A7B or A7C identical to those previously described (see Figures 2 and 3) which is inserted into the radio bridge to enable the transiting communication to be encrypted and decrypted. In this case a normal unmodified bluetooth microphone/earpiece A1 can also be used, to communicate in encrypted mode via the device D1.

With regard to the hardware of the palm-held device D1, this incorporates two bluetooth chips. The first D4 is conventional and serves for the connection via D2 to the bluetooth device A1. The second is a bluetooth chip A7, in its A7B or A7C form which, besides performing the audio and vocal encryption and decryption operations, can also remain transparent towards the communications from and to D4. This second bluetooth chip A7 supports all the digital communication functions of the microcalculator E1 with the cellular telephone A2 via D3.

The palm-held device D1 together with the device A1 forms a bluetooth pair operating with a piconet even in the absence of the GSM cellular telephone.

In detail, the palm-held device D1, represented in Figure 5, is similar to a normal palm telephone; it is provided with a display D5 and keypad D6 which are connected to the microcalculator E1. This microcalculator is internally complete with a RAM E2 and flash memory E3 with relative I/O circuits E4. The flash memory is expandable via the memory card E5 added externally in a suitable easily accessible seat.

The microcalculator E1 is also accessible via an external USB connection E6. The power circuits E7 and the storage battery E8 are also shown for completeness.

The encryption and decryption of alphanumerical messages such as SMS, E-mail or of ASCII files, or of their directrices, are performed by the microcalculator, which uses special applicational software E9 loaded into the internal flash memory E3.

It may be necessary, in relation to the method used for encryption and decryption of alphanumerical messages, to add external hardware or firmware or software components E10 interfaced with or controlled by the special encryption and decryption software E9.

For each "Mode of Operation" the switch E11 assumes a particular configuration.

When switched on, the palm-held device automatically assumes the "First Operating Mode" (stand-by). In this case the switch E11 remains open and no interconnection is made.

With the "Second Operating Mode" (internal source data communication) the microcalculator E1 is able to transmit and receive encrypted alphanumerical messages, such as SMS or E-mail. The encryption and decryption operations are effected by the said microcalculator E1, using the specific applicational software E9 and possibly the additional hardware E10. In this case the microcalculator E1 is connected, via its port E4, to the second bluetooth chip A7 which, even in this mode of operation, does not use the modification provided in the bluetooth chip by the present invention, so being transparent to the communication provided by E4. It should be noted that in this case the data communication channel already provided in the bluetooth chip is used. Hence the data communications do not use the audio transmission channel of the second bluetooth chip A7, but only the modulator/demodulator and oscillator block B5 or C5. The result is that all the blocks of A7, with the exception of B5 or C5, B2 or C2, B3 or C3, B4 or C4, or B7 or C7, B8 or C8, B9 or C9 remain passive. In any event all the data files contained in the memory, in the clear or encrypted, are available at the USB connection E6. The reception of an encrypted SMS or E-mail automatically activates this second mode.

With the "Third Operating Mode" (external source data communication), the microcalculator E1 is able to acquire, encrypt and decrypt, via the USB port E6, all the ASCII type files and directrices for these files, originating from a normal computer, from a memory key or pen drive, USB flash drive, etc., from a mobile HD, form a photographic machine and from any other USB-compatible object. The ASCII files and directrices acquired in this manner are encrypted by the microcalculator E1 and transmitted encrypted as enclosures to an E-mail. All this takes place as already seen for the "Second Operating Mode" (internal source data communication). The inverse reception decryption function is evidently implicit. In any event all the files and directrices contained in the memory, in the clear or encrypted, transmitted or to be transmitted or received, are available at the USB connection E6 and hence available for any USB compatible memory support. The reception of an encrypted ASCII file automatically activates this second mode.

With the "Fourth Operating Mode", the normal or encrypted telephony functions can be implemented. The switch E11 in this case connects the microphone D7 and the loudspeaker D8, or alternatively the microphone and the mobile earpiece D9, to the bluetooth chip A7 which now operates in accordance with the modification provided by the present invention, encrypting and decrypting the vocal communication. Hence only the second piconet will be active with the communication D3 which connects the cellular telephone A2 and from there the GSM network.

With the "Fifth Operating Mode" (by-pass) the palm-held device D1 assumes the functions of radio bridge between A1 and A2.

With the "Sixth Operating Mode" the palm-held device D1 again maintains the functions of radio bridge between A1 and A2, but at the same time enables an audio communication with a non-modified normal device A1 to be encrypted and decrypted by means of the bluetooth chip A7 modified as A7B or A7C.

The apparatus D1, formed according to the present invention, can evidently communicate with a similar device inserted into the same "piconet" in the absence, and hence totally independently, of the cellular telephones and of the GSM network.

Hence in contrast to just the earpiece A1 and A4, the palm-held device D1 is connected to the GSM cellular telephone using both the communication techniques already seen for the device A1. The first uses the normal "audio or voice" path of any "bluetooth-cellular telephone" communication. Instead the second, specific for the "Second and Third Operating Mode" (data communication) enables access to a specific point of the said cellular telephone, hence enabling installation into the cellular telephone of an "ad hoc" software programme, easily accessible to the cellular telephone via the normal USB ports provided on the cellular telephone.

The present invention does not specify either the encryption method used or the key distribution mechanism, as these are techniques well known to the expert of the art, and are of no relevance to the present invention.

## Claims

1. An encryption system for audio or vocal communications, comprising a device (A1) for encrypted communication with a similar device (A4), said device (A1, A4) comprising at least one bluetooth chip (A7) arranged to effect a communication via at least one bluetooth connection (A6) between a first (A1) and a second (A4) of said devices, **characterised in that** said bluetooth chip comprises encryption means (B18, B19, B20, C18, C19) accessible to a user.

2. A system as claimed in claim 1, **characterised in that** said encryption means are arranged to process an input analogue signal derived from a microphone (B1, C1), amplified (B2, C2) and converted into digital form (B3, C3) to transform it into an encrypted digital signal of vocal character, and/or to decrypt an encrypted digital signal of vocal character to transform it into a digital signal to convert into an analogue signal (B8, C8) suitable to be filtered and amplified (B9, C9) in order to be reproduced by a loudspeaker (B10, C10).

3. A system as claimed in claim 1, **characterised in that** the device (A1) and the similar device (A4) are each associated via a bluetooth connection (A6) with a respective cellular telephone (A2, A3), said cellular telephones (A2, A3) mutually communicating via a GSM network (A5) or similar network.

4. A system as claimed in claim 1, **characterised in that** said encryption means comprise software (B18) loaded into a flash memory of said bluetooth chip (A7, A7B) able to perform the encryption and/or decryption operations.

5. A system as claimed in claim 1, **characterised in that** said encryption means comprise hardware (C18) and software (C19) loaded into a flash memory of said bluetooth chip (A7, A7C) able to cooperate to perform the encryption and/or decryption operations.

6. A system as claimed in one or more of the preceding claims, **characterised in that** said loudspeaker (B10, C10) and said microphone (B1, C1) are integrated into the device (A1, A4).

7. A system as claimed in one or more of the preceding claims, **characterised in that** a body thereof has the shape of a bluetooth earpiece.

8. A palm-held device (D1) provided with keypad (D6) and display (D5) for transmitting or receiving SMS and E-mail messages encrypted via a microcalculator (E1), a switch (E11) and specific encryption and decryption means (E9, E10) present in said palm-held device, **characterised by** comprising at least one bluetooth chip (A7) modified in accordance with one or more of the preceding claims.

9. A palm-held device (D1) as claimed in the preceding claim, **characterised by** comprising a non-modified further bluetooth chip (D4).

10. A palm-held device (D1) as claimed in one or more of the preceding claims, **characterised by** including a microphone (D7) and a loudspeaker integrated therein.

11. A palm-held device (D1) as claimed in claim 8, **characterised by** comprising means for the removable connection of a microphone/earpiece cable (D9).

12. A method for encrypting a communication effected between two devices (A1, A4), comprising the steps of :
a. feeding into a first device (A1) an input voice signal derived from a microphone (B1, C1);
b. encrypting the input signal within the first device (A1) by encryption means (B18, B19, C18, C19) accessible to the user to obtain an encrypted digital signal of vocal character;
c. transmitting the encrypted digital signal of vocal character via bluetooth from said earpiece device (A1) to a second device (A4) similar to the first;
d. receiving the encrypted signal in the second device (A4);
e. decrypting the received signal by decryption means (B18, B20, C19, C18) to hence transform it into a digital signal to be treated in order to obtain a signal reproducible by a loudspeaker (B10, C10).

13. A method as claimed in the preceding claim, **characterised in that** the signal is transmitted via a bluetooth connection (A6) with a respective cellular telephone (A2, A3), said cellular telephones mutually communicating via a GSM network (A5) or the like.

14. A system or method **characterised in that** said encryption and/or decryption means suitable for processing voice signals (B18, C18, C19) are accessible by the user to enable the user to activate or deactivate them at will.

15. A system or method as claimed in the preceding claim, **characterised in that** said encryption means are accessible to the user to enable the user to insert and/or distribute an encryption key using any conventional or non-conventional method.

16. A system or method **characterised in that** said encryption and decryption means suitable for processing ASCII signals (IE9, E10) are accessible by the user to enable the user to activate or deactivate them at will.
